# EUROPEAN PATENT APPLICATION

(11) **EP 4 818 036 A1**
(43) Date of publication of application: **07.10.2026**
(21) Application number: 25167585.6
(22) Date of filing: 31.03.2025
(51) Int. Cl.: B64C 3/56

(54) **LATCHING UNIT IN AN AIRCRAFT WING HAVING A FOLDABLE WING TIP, AIRCRAFT WING AND AIRCRAFT HAVING SUCH WING**

(71) Applicant: AIRBUS Operations GmbH, 21129 Hamburg (DE); Airbus Operations Limited, Bristol BS34 7PA (GB)
(72) Inventor: WINKELMANN, Christoph, 21129 Hamburg (DE); KEDOR, Florian, 21129 Hamburg (DE); DEMAND, John, 21129 Hamburg (DE); GUENNEMANN, Katharina, 21129 Hamburg (DE); MORRELL, Paul, Filton Bristol, BS34 7PA (GB); HAND, Matthew, Filton Bristol, BS34 7PA (GB)
(74) Representative: Isarpatent

(57) **Abstract**

The present invention provides a latching unit (1) in an aircraft wing (201a, b) having a fixed wing part (202a, b) and a hinged wing tip (204a, b) foldable about a hinge axis, comprising a first latching actuator (3a) driven by a drive unit arranged within the fixed wing part (202a, b) and coupled to a first latching bolt (7a) and a second latching actuator (3b) coupled to a second latching bolt (7b) with both latching bolts (7a, b) configured for locking or unlocking hinge levers (10) extending into the latching unit (1),wherein the latching actuators (3a, b) comprise hollow screw shafts (6a, b) having threaded rods (8a, b) extending in opposite directions from adjacent ends (15a, b) of the hollow screw shafts (6a, b) and engaging with threaded elements (24a, b) provided in end portions (25a, b) of the respective latching bolts (7a, b), and wherein the latching bolts (7a, b) are movable in opposite axial directions into a locking or unlocking position by rotation of the threaded rods (8a, b), an aircraft wing (201a, b) and an aircraft (200) having such wing (201a, b) .

## Description

The present invention pertains to a latching unit in an aircraft wing having a fixed wing part and a wing tip part foldable relative to the fixed wing part, an aircraft wing, and an aircraft having such a wing.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft or other installation environments.

There is a trend towards increasingly large passenger aircraft with higher performance efficiency (for example fuel burn reduction), for which it is desirable to have correspondingly large wing spans. However, the maximum aircraft span is effectively limited by airport operating rules which govern various clearances required when manoeuvring around the airport (such as the span and/or ground clearance required for gate entry and safe taxiway usage).

To solve this problem, it is known to provide a passenger aircraft with foldable wings. The foldable wing typically comprises an inner region and an outer region, the outer region being moveable relative to the inner region between a) a flight configuration for use during flight, and b) a ground configuration for use during ground-based operations. In the ground configuration the outer region is moved (typically rotated) relative to the inner region such that the span of the wing is reduced. Thus, the aircraft can still adhere to airport operating rules yet benefit from the larger span in flight. Some systems are using separate actuation devices for the latching and tip actuation function, i. e. for folding the wing tip. In some of these systems separate motors are used for the latching of the wing tip. Hence, the assemblies consume a lot of space in the wing area, also referred to as fixed wing box, where space is very much limited.

Against this background, it is an object of the present invention to find a latching unit in an aircraft wing with reduced complexity and space requirements in the wing area.

This object is achieved by a latching unit having the features of claim 1, an aircraft wing having the features of claim 14 and an aircraft having the features of claim 15.

According to a first aspect of the invention, a latching unit in an aircraft wing having a fixed wing part and a hinged wing tip foldable about a hinge axis is provided. The latching unit comprises a first latching actuator driven by a drive unit arranged within the fixed wing part and coupled to a first latching bolt and a second latching actuator coupled to a second latching bolt with both latching bolts configured for latching or unlatching hinge levers extending into the latching unit, wherein the latching actuators comprise hollow screw shafts having threaded rods extending in opposite directions from adjacent ends of the hollow screw shafts and engaging with threaded elements provided in end portions of the respective latching bolts, and wherein the latching bolts are movable in opposite axial directions into a latched or unlatched position by rotation of the threaded rods. The advantage of the latching unit described hereinafter is that the latching unit is driven by a single latching drive shaft coupled to a first latching actuator which translates the rotary movement in a second latching actuator and allows for axial movement of two latching bolts. The latching unit of the invention thus has a shorter length which allows for installation of the unit into a smaller space envelope in the wing structure. The hollow screw shaft is designed to drive the screw but also to take its axial loads. For installation in an aircraft wing, the latching unit is aligned with a defined hinge line of the wing and arranged in a plane with the hinge line in the fixed wing part. It can also be arranged at an angle relative to the hinge line, perpendicular or essentially perpendicular to the longitudinal axis of the wing, or parallel or essentially parallel to the fuselage, depending on the configuration and structural design of the aircraft wing.

A further aspect of the invention lies in an aircraft wing having a fixed wing part and a hinged wing tip and comprising a latching unit according to the invention. It is an idea of the invention to use a larger wingspan in flight, while the wing tip section can be folded up on the ground to comply with airport regulations. Using the latching unit of the invention in the aircraft wing reduces mechanical complexity and results in higher reliability and increased operational safety while requiring less space in the wing structure which allows for installation of the unit into a smaller space envelope.

A further aspect of the invention lies in an aircraft having an aircraft wing according to the invention. The wing consists of a fixed main section and a hinged wingtip section that is controlled by the tip actuation unit, thus allowing the wing tip to be fully deployed in flight for aerodynamic efficiency and folded on the ground to meet structural requirements and space constraints while the latching unit ensures a reliable latching of the wing tip during either of transition of the wing tip from the retract to the extended position or when the wing tip is folded up in the retracted position while the aircraft is parked.

Advantageous embodiments and further developments are apparent from the further dependent claims and from the description with reference to the figures.

According to an embodiment of the latching unit each latching actuator is received in an independent housing with the housings being fixed opposite to each other to lug extending in a longitudinal direction of the fixed wing part. It is an advantage of this embodiment, that establishing a rigid connection between the two latching actuators placed in a latch line between the fixed lug is avoided. The first latching actuator is in particular bolted rigidly against the lug on the wing forward side while the second latching actuator is in particular bolted rigidly against the lug on the wing after side, or vice versa. This has the effect, that any wing deflection in the respective lugs occurring when the hinge structure of the wing is exposed to loads in flight or on ground will not impact the latching unit and can thus be compensated on either side without impairing the entire unit.

According to an embodiment of the invention, the hollow screw shafts are supported by thrust bearings arranged axially spaced between inner circumferential walls of the housings and outer circumferential surfaces of the hollow screw shafts. The hollow screw shaft is designed to drive the screw but also to take its axial loads. In the latching unit of the invention, these functions are provided at a minimum length of the actuators, defined essentially by the stroke of the latching bolts. It is an advantage of the embodiment, that the thrust bearings support the hollow screw shaft at its outside thus allowing an installation of the latching unit within the limited space available in the fixed wing part or wing box due to only a very short drive connection to the screw. Therein the bearings are sized such that the hollow screw shaft arrangement can run through the inner radius of the bearings to thus allow an optimization of the overall actuator length.

According to a further embodiment of the invention a latching drive shaft driving the latching actuators is provided, with the latching drive shaft being connected to a drive unit. In this connection, the latching drive shaft is preferably coupled with a bevel gearbox provided at the first latching actuator. It is an advantage of this configuration that only one of the latching actuators needs to include a driving mechanism, also referred to as latching down drive, which is connected to the drive unit by the latching drive shaft. In this configuration the hollow screw shaft of the respective latching actuator is driven by the drive unit, wherein the drive unit can control the screw position in the hollow screw shaft and can also arrest the latching actuator or screw shaft by a brake.

According to a further embodiment of the invention, for driving the second latching actuator said second latching actuator is coupled to the first latching actuator by a connection element arranged between adjacent ends of the first latching actuator and the second latching actuator, in particular of the hollow screw shafts thereof. In a preferred further development, the connection element comprises first splines coupled to second splines provided in the ends of the hollow screw shafts of the latching actuators projecting into the connection element. The first spline is designed in particular as a crown spline while the second spline is preferably designed as a female spline or vice versa. With this embodiment a drive connection between the latching actuators is established that allows to drive the second latching actuator via the first latching actuator which again is driven by the drive unit. The connection element thereby connects both hollow screw shafts of the latching actuators. It is an advantage, that the connection element allows for deflections between the two latching actuators during flight and on ground during the latching process due to the spline arrangement. This is achieved in particular by the crowned splines in the connection element and female splines at the end of the hollow screw shafts extending in the connection element.

According to a further embodiment of the invention, the threaded rods are configured as a ball screw, a roller screw, or a trapezoidal screw. This allows for adaption of the latching unit depending on the loads that have to be generated by the latching mechanism and the available space. A threaded rod with a ball screw, roller screw, or trapezoidal screw is a mechanical drive system that converts rotational motion into linear motion within the latching unit. While a ball screw uses recirculating ball bearings to reduce friction, allowing high efficiency and precision, roller screw uses threaded rollers instead of balls, enabling higher load capacity and durability. A trapezoidal screw, also referred to as ACME screw according to a standardized thread form, features a trapezoidal thread profile, offering robustness and self-locking properties.

According to a further embodiment of the invention, coupled with the drive unit a tip actuation drive shaft for driving the tip actuation unit is provided passing through the latching unit, with the tip actuation drive shaft comprising a first shaft section extending between the drive unit and the latching unit and a second shaft section extending between the latching unit and a tip actuation unit of a tip actuation and latching system, wherein a bevel gear unit is provided at the first or second latching actuator comprising a bevel gear positioned concentrically with the latching actuator and configured to mesh with bevel gears at each of the first and the second shaft section abutting with the bevel gear unit. The combination of the bisection of the tip actuation drive shaft and the integrated bevel gear unit - in some instances also referred to as cross-over-device - provided in the latching actuator, ensures precise synchronisation of the mechanical drive impulses, reduces mechanical losses, and minimises play in the connecting elements. The bevel gear unit housed in the latching unit saves space, which is particularly advantageous in the confined spaces of aircraft by allowing for passing the tip actuation drive shaft through the latching unit without a requirement of additional gearing to bypass the latching unit in the assembled state. This thus supports a compact design and in-line integration of the drive unit, the latching unit, and the tip actuation unit.

According to a further embodiment of the invention the latching drive shaft is coupled to a first brake unit acting on the latching drive shaft and the tip actuation drive shaft is coupled to a second brake unit acting on the tip actuation drive shaft, wherein the brake units are arranged in or adjacent to the drive unit. The integration of brake units on the respective drive shafts allows for selectively blocking specific functional sections during operation. For example, the brake mechanism of the latching drive shaft can be activated when the wing tip section moves into the extending configuration, while the tip actuation drive shaft is released to enable movement of the wing tip section. Conversely, when the wing tip section is latched, the brake of the tip actuation drive shaft is activated to prevent unwanted movement. This targeted control is crucial for ensuring that the system is in defined operating states and to avoid unwanted back driving. The immediate arrangement of the brake units in or next to the drive unit shortens the distance between the drive source and the brake mechanism. This enables a fast response time, which is particularly important during dynamic load changes in the folding and extending process. The independent control of the brakes on the respective drive shafts allows the system to quickly switch between latching and actuation functions, improving positioning and operation of the hinged wing-tip section. Immediate brake activation at critical phases prevents uncontrolled movements and reduces the risk of component damage, especially during transition between flight and ground configurations. Placing the brake units in close proximity to the drive unit minimises cabling and assembly work, resulting in a more robust and maintenance-friendly design.

According to a further embodiment of the invention each of the latching actuators is provided with at least one locking mechanism, in particular comprising a spring-loaded cam lock arranged perpendicular to the hollow screw shaft, with the cam lock configured to lock the latching bolt moved in the latching position, by rotating a rotatable cam into a position behind the latching bolt and/or a spring-loaded locking pin arranged perpendicular to the hollow screw shaft, with the locking pin configured to lock the latching bolt moved in the latched position, by engaging behind the end portion of the latching bolt. Each locking mechanism is preferably installed near the interface of each latching actuator to the fixed wing part or wing box and hence the airframe of the wing. It is an advantage of the locking mechanisms that they block the movement of the latching bolt into the unlatching direction when the latching bolts are fully latched for flight. This is achieved by rotating the respective cams behind the fully extended latching bolts and/or radially moving the looking pins in a position behind the end portions of the latching bolt. In a further development, the locking mechanisms are independently driveable by a locking actuator driven by a locking actuator drive unit. In an alternative embodiment the locking mechanisms are provided interconnected by a locking actuator shaft running in parallel with the hollow screw shafts. In this configuration, the interconnected locking mechanisms are driveable simultaneously by the locking actuator drive unit via the locking actuator shaft.

In a preferred embodiment at least one locking position sensors is provided in the locking mechanisms that is configured to detect positions and/or integrity of the cam locks and/or the locking pins. In a further embodiment, at least one latching position sensor is provided that is configured to detect at least one of a position and/or integrity of the threaded rods and/or the latching bolts. The locking actuators are preferably actuated by a lever arrangement driven by the locking actuator drive unit. Advantageously, each locking mechanism is created such that a mechanical failure of the cams and/or pins will lead to a sensor anomaly and will be annunciated as a failure. The spring-loaded locking mechanisms provide the advantage that the springs will always push the cams and/or pins into the locked position. Thus, the aforesaid locking actuator acts only into the release direction and is powered to release the locking mechanisms, only. When unpowered the locking actuator and connected cam locks and/or locking pins are pushed back into the locked position by the spring-load. This advantageously ensures that a mechanical failure of the locking actuation during flight will not release the latching function. Therein the locking mechanisms are installed on the latching actuators in such a way that single mechanical failure of the housing and the attachment to the airframe will not lead to a loss of the latching function of the latching bolts. This can be realized by a dual load path design between the locking mechanisms and the airframe interface. The locking mechanisms comprising a cam lock can be provided with two cams that are installed side by side within each locking mechanism. Each cam has its own support and the rotational movement from one cam to the other is transferred through a connection located at the tips of the cams. In case one cam fails due to a fracture, the rotational movement will not be transferred from one cam to the other one and the position sensor will detect no movement anymore. The latching position sensor provided in an embodiment of the invention is installed on or adjacent to the actuator housing thus minimizing the number of required installation interfaces, part numbers, and effort for wiring. Advantageously the installation of the latching position sensor is connected to the threaded element of the hollow screw shaft of the latching bolt. To allow for monitoring integrity of the latching bolt, the threaded element is fixedly connected to the far end of the latching bolt. In this embodiment a separate structural item is installed inside of the hollow latching bolt. This structural item is attached to the latching bolt at its far end the threaded element at the opposite end thereof. The structural item allows a penetration of the threaded rod when the latching bolt is retracted into the unlatched position. In case the latching bolt disintegrates, jams, or detaches, the extension of the latching bolt into the latched position will lead to a separation of the driven bolt tip, the disconnected fragment of the latching bolt and/or the threaded element and enables failure detection by the latching position sensor. The sensors provide a clear digital signal to a control unit so that the status fully latched or fully unlatched can be monitored in real time.

A dual-sensor arrangement advantageously allow for a redundant or supplementary detection of the structural integrity of the latching bolt and whether the latching bolt has correctly engaged in the intended latching position. The respective sensors allow to also determine during operation whether the cam lock or locking pin is correctly fixed or whether there is a fault that could lead to improper locking. Monitoring both mechanisms with sensors has the advantage of creating a redundant layer of security. If a sensor fails or delivers an incorrect signal, parallel monitoring by the other sensor enables early error diagnosis and, if necessary, the automatic initiation of safety measures e.g. via a central control unit. Optionally, proximity sensors can be used that are positioned near the tip of the latching bolts to monitor the fully latched position.

The invention will be explained in greater detail with reference to exemplary embodiments depicted in the drawings as appended.
- Fig. 1: depicts a sectional view of a latching unit in a system according to an embodiment of the invention;
- Fig. 2: depicts a perspective view of a locking mechanism in a latching unit according to a further embodiment of the invention in the latched and locked position;
- Fig. 3: depicts perspective view of a locking mechanism in a latching unit according to a further embodiment of the invention in the unlocked position; and
- Fig. 4: schematically depicts an aircraft according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

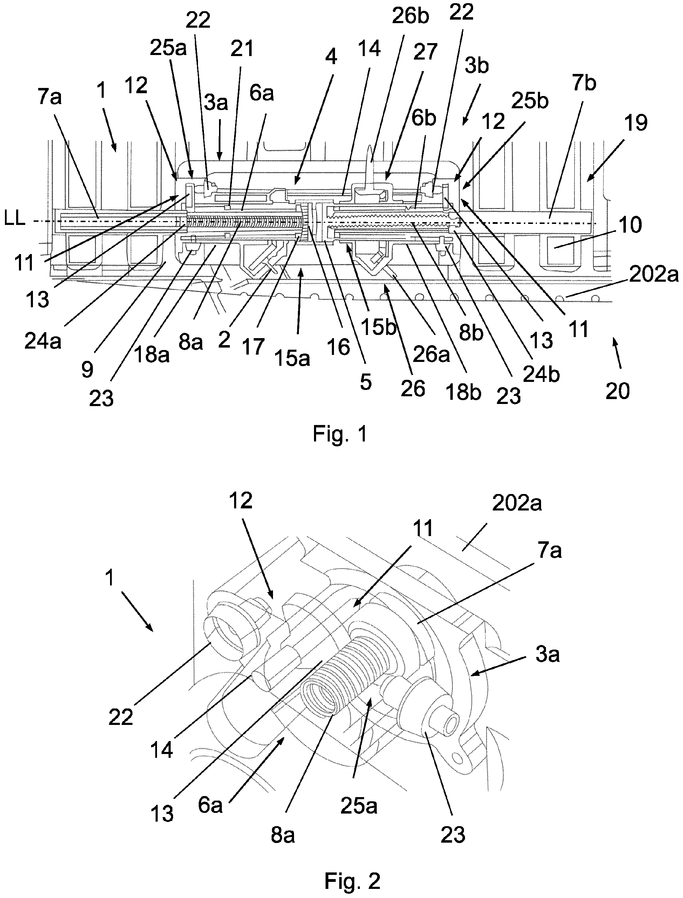

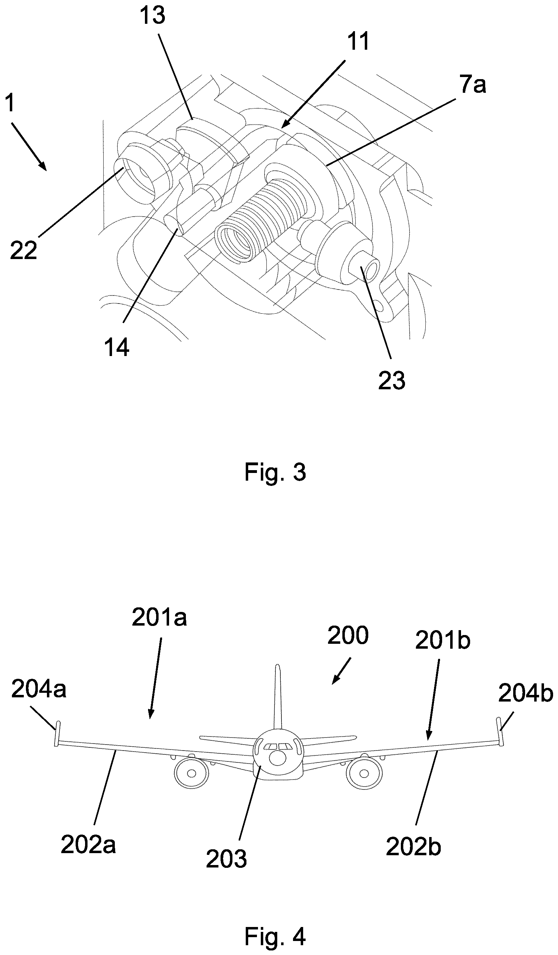

Fig. 1 depicts a sectional view of a latching unit 1 according to an embodiment of the invention. Fig. 1 illustrates how the torque is transmitted from the latching drive shaft 2 - which receives the torque from the drive unit via a differential gear (not shown) - to the first latching actuator 3a via a bevel gearbox 4. Each latching actuator 3a, b is received in an independent housing 18a, b fixed opposite to each other to lug 9 extending in a longitudinal direction of the wing box 20. A rigid connection between the two latching actuators 3a, b placed in a latch line LL between the lugs 9 is avoided. One of the latching actuator 3a, b is bolted rigidly against the lug 9 on the wing forward side while the other latching actuator 3a, b is bolted rigidly against the lug 9 on the wing after side, or vice versa. Any wing deflection occurring in the respective lug 9 when the hinge structure of the wing tip 204a, b (see Fig. 4) is exposed to loads in flight or on ground will not impact the latching unit 1 and can thus be compensated on either side without impairing the entire latching unit 1. Hollow screw shafts 6a, b are supported by thrust bearings 21 arranged axially spaced between inner circumferential walls of the housings 18a, b and outer circumferential surfaces of the hollow screw shafts 6a, b. Inside the latching unit 1, the torque is distributed via a connection element 5 provided between the first and second latching actuator 3a, b, so that it is delivered synchronously to both latching actuators 3a, b. Each latching actuator 3a, b comprises a hollow screw shaft 6a, b designed to rotate the associated latching bolts 7a, b axially into the intended position when driven by the drive unit. As the hollow screw shafts 6a, b are turned, the latching bolts 7a, b are displaced in opposite direction due to the rotary movement via the threaded rods 8a, b positioned inside the hollow screw shafts 6a, b and extending through a threaded element 24a, b positioned in the end portions 25a, b of the latching bolts 7a, b. Thereby the latching bolts 7a, b are moved into the lug stacks 19 of hinged levers 10 actuated by the tip actuation unit (not shown) and passed into the latching unit 1 thus achieving secure mechanical engagement and latching of the extended wing tip 202 via the latched lug stacks 19 provided in the end regions of the hinged levers 10. A reverse rotation moves the latching bolts 7a, b out of the latching position and enables the tip actuation unit (not shown) to rotate the hinged wing tip 204a, b (see Fig. 4) over the hinge axis by actuating the hinged levers 10 to move out of the latching unit 1. Each of the latching actuators 3a, b comprises a locking mechanism 11 provided in the illustrative embodiment with a spring-loaded cam lock 12 coupled to a locking actuator shaft 14 for simultaneous actuation of both locking mechanisms 11. Embodiments with independent actuation of the locking mechanisms 11 are also encompassed albeit not shown in Fig. 1. The locking actuator shaft 14 is actuated by a lever arrangement (not shown) and driven by a locking actuator drive unit annexed to the drive unit or located separately from the drive unit. The spring-loaded locking mechanisms 11 will always push the cams 13 into the locked position. The locking actuator shaft 14 acts only into the release direction and is only powered to release the locking mechanisms 11. When unpowered the locking actuator shaft 14 and connected cam locks 12 are pushed back into the locked position by the spring-load.

The cam locks 12 are arranged perpendicular to the hollow screw shafts 6a, b with the cam locks 12 configured to lock the latching bolts 7a, b in a latched position by rotating rotatable cams 13 into a locking positions at the hollow screw shafts 6a, b.

The arrangements shown in Fig. 1 illustrate how the connection element 5 between the actuators 3a, b ensures synchronised operation of both latching bolts 7a, b. The connection element 5 receives adjacent ends 15a, b of the first latching actuator 3a and the second latching actuator 3b. The connection element 5 comprises a first spline 16, designed as a crown spline coupled to second splines 17, designed as a female spline, provided in the ends 15a of the first and second latching actuator 3a, b each projecting into the connection element 5. Consequently, a drive connection between the latching actuators 3a, b is established that allows to drive the second latching actuator 3b via the first latching actuator 3a, which again is driven by the drive unit. The connection element 5 therein connects both hollow screw shafts 6a, b of the latching actuators 3a, b. The connection element 5 allows for deflections between the two latching actuators 3a, b during flight and on ground during the latching process. This is achieved in particular by the first splines 16 (crown splines) in the connection element 5 and the second splines 17 (female splines) at the ends 15a of the latching actuators 3a, b hollow screw shafts 6a, b extending in the connection element 5.

Fig. 1 further shows how a tip actuation drive shaft 26 for driving the tip actuation unit positioned downstream from the latching unit on the hinge axis of the foldable wing tip 204a, b (not shown) is provided passing through the latching unit 1, with the tip actuation drive shaft 26 comprising a first shaft section 26a extending between the drive unit (not shown) and the latching unit 1 and a second shaft section 26b extending between the latching unit 1 and the a tip actuation unit of a tip actuation and latching system. A bevel gear unit 27 is provided at the second latching actuator 3b comprising a bevel gear positioned concentrically with the second latching actuator 3b and configured to mesh with bevel gears at each of the first and the second shaft section 26a, b abutting with the bevel gear unit 27. The combination of the bisection of the tip actuation drive shaft 26 and the integrated bevel gear unit 27 - in some instances also referred to as cross-over-device - provided in the second latching actuator 3b, ensures precise synchronisation of the mechanical drive impulses, reduces mechanical losses, and minimises play in the connecting elements. The bevel gear unit 27 housed in the latching unit 1 saves space, which is particularly advantageous in the confined spaces of aircraft by allowing for passing the tip actuation drive shaft 26 through the latching unit 1 without a requirement of additional gearing to bypass the latching unit 1 in the assembled state. This thus supports a compact design and in-line integration of the drive unit, the latching unit 1 and the tip actuation unit. In the embodiment of Fig. 1 each of the latching actuators 3a, b is provided with a locking mechanism 11, each comprising spring-loaded cam locks 12 arranged perpendicular to the hollow screw shafts 6a, b, with the cam locks 12 configured to lock the latching bolts 7a, b moved in the latching position, by rotating rotatable cams 13 into positions behind the latching bolts 7a, b. Additionally or as an alternative, the latching unit 1 could be provided with second locking mechanisms 11 comprising spring-loaded locking pins arranged perpendicular to the hollow screw shafts 6a,b and configured to lock the latching bolt 7a, b moved in the latched position by engaging behind the end portions 25a, b of the latching bolts 7a, b. The locking mechanism 11 is preferably installed near the interface of each latching actuator 3a, b to the fixed wing part 202a, b or wing box 20 and hence the airframe of the aircraft wing 201a, b (see Fig. 4). The locking mechanisms 11 block the movement of the latching bolts 7a, b and prevent movement into the unlatching direction when the latching bolts 7a, b are fully latched for flight. In the embodiment of Fig. 1 this is achieved by rotating the respective cams 13 behind the fully extended latching bolts 7a, b. In the alternative or supplemental configuration, the locking pins are radially moved in positions behind the end portions 25a, b of the latching bolts 7a, b. In the embodiment of Fig. 1 the locking mechanisms 11 are interconnected by a locking actuator shaft 14 running in parallel with the hollow screw shafts 6a, b. In this configuration, the interconnected locking mechanisms 11 are driven simultaneously by the locking actuator drive unit via the locking actuator shaft 14.

The latching unit 1 comprises locking position sensors 22 and latching position sensors 23 each annexed to the latching bolts 7a, b. Therein the locking position sensors 22 are annexed to the locking mechanisms 11 and configured to detect positions and/or integrity of the cam locks 12 and/or in an alternative or supplemental embodiment the locking pins. The latching position sensors 23 are configured to detect at least one of a position and/or integrity of the threaded rods 8a, b and/or the latching bolts 7a, b. Each locking mechanism 11 is created such that a mechanical failure of the cams 13 and/or pins will lead to a sensor anomaly in the locking position sensors 22 and will be annunciated as a failure. The latching position sensors 23 act are installed on or adjacent to the actuator housings 18a, b and allow for monitoring integrity of the latching bolts 7a, b as well as the partially or fully latched position or failures occurring during latching.

Fig. 2 schematically depicts a perspective view of a locking mechanism 11 in a latching unit 1 according to the invention in the latched and locked position.

In the assembled state of the latching unit 1 each of the actuators 3a, b is provided with a locking mechanism 11. The locking mechanism 11 as illustrated in Fig. 2 comprises a spring-loaded cam lock 12 arranged perpendicular to the hollow screw shaft 6a. The cam lock 12 is configured to lock the latching bolt 7a moved in the latching position. In the latched position, the cam 13 is rotated into a position behind the end portion 25a latching bolt 7a. The locking mechanism 11 is installed near the interface of the actuator 3a to the fixed wing part 202a or wing box 20. In the embodiment of Fig. 2 the latching bolt 7a is fully latched for flight and the locking mechanism 11 blocks the latching bolt 7a against moving into the unlatching direction This is achieved by rotating the cam 13 behind the fully extended latching bolt 7a. The locking position sensor 22 is provided in the locking mechanism 11 and configured to detect positions of the cam 13. The latching position sensor 23 detects a position of the interface between the threaded rod 8a and the latching bolt 7a. The partially shown locking actuator shaft 14 coupled to the cam 13 is actuated by a lever arrangement (not shown) that is driven by the locking actuator drive unit. The locking mechanism 11 is created in a way that a mechanical failure of the cam 13 will lead to a sensor anomaly in the locking position sensor 22 and will be annunciated as a failure. In the spring-loaded locking mechanisms 11 a springs will push the cam 13 into the locked position. Thus, the locking actuator shaft 14 acts only into the release direction and is powered to release the locking mechanism 11, only. When unpowered the locking actuator shaft 14 and connected cam 13 are pushed back into the locked position by the spring-load.

Fig. 3 schematically depicts a perspective view of a locking mechanism 11 of Fig 2 in a latching unit 1 according to the invention in unlocked position. Elements described in connection with Fig. 2 will not be described anew. To unlock, the locking actuator shaft 14 coupled to the cam 13 was actuated by a lever arrangement (not shown) that is driven by the locking actuator drive unit. By driving the locking actuator shaft 14 the spring of the spring-loaded locking mechanism 11 is compressed while the cam 13 is rotates out of the locking position behind the latching bolt 7a. In Fig. 3 the locking actuator 14 acted into the release direction and is powered to release the locking mechanism 11. When unpowered the locking actuator shaft 14 and connected cam 13 will be pushed back into the locked position, as shown in Fig 2, by the spring-load into the locking position with the cam 13 rotating into a position behind the latching bolt 7a. The locking position sensor 22 is provided in the locking mechanism 11 that is configured to detect positions of the cam 13 and to control the operation of an actuation and latching system or block the operation if failure is detected within the latching unit 1 e. g. if the latching bolt 7a fails to reach the latching position such that the cam 13 cannot engage in the locking position or if the latching position sensor 23 detects a broken or decoupled latching bolt 7a.

Fig. 4 schematically depicts an aircraft 200 according to an embodiment of the invention. The aircraft 200 is provided with wings 201a, b. The wings 201a, b comprises a fixed wing part 202a, b attached to the fuselage 203 and a foldable wing tip 204a, b. The foldable wing tips 204a, b are moveable relative to the fixed wing part 202a, b between a flight configuration for use during flight, and a ground configuration, as shown in Fig. 4, for use during ground-based operations. In the ground configuration the wing tips 204a, b are moved (typically rotated) relative to the fixed wing parts 202a, b such that the span of the wings 201a, b is reduced. Thus, the aircraft 200 can adhere to airport operating rules yet benefit from the larger span in flight. An actuation and locking system comprising the latching unit 1 according to the invention is installed within each wing 201a, b in alignment with a hinge line LL and adapted to the spatial limitation within the wing design by reducing the number of elements within the system thus reducing space requirements and system complexity. This reduces weight and facilitates the assembly of the aircraft wings 201a, b.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 1: latching unit
- 2: latching drive shaft
- 3a, b: latching actuator
- 4: bevel gearbox
- 5: connection element
- 6a, b: hollow screw shaft
- 7a, b: latching bolt
- 8a, b: threaded rods
- 9: lug
- 10: hinge lever
- 11: locking mechanism
- 12: cam lock
- 13: cam
- 14: locking actuator shaft
- 15a, b: end
- 16: first spline
- 17: second spline
- 18a, b: housing
- 19: tip lug stack
- 20: wing box
- 21: bearing
- 22: locking position sensor
- 23: latching position sensor
- 24a, b: threaded element
- 25a, b: end portion
- 26: tip actuation drive shaft
- 26a, b: shaft section
- 27: bevel gear unit
- 200: aircraft
- 201a, b: wing
- 202a, b: fixed wing part

- 203: fuselage
- 204a, b: wing tip
- LL: latch line

## Claims

1. Latching unit (1) in an aircraft wing (201a, b) having a fixed wing part (202a, b) and a hinged wing tip (204a, b) foldable about a hinge axis, comprising a first latching actuator (3a) driven by a drive unit arranged within the fixed wing part (202a, b) and coupled to a first latching bolt (7a) and a second latching actuator (3b) coupled to a second latching bolt (7b) with both latching bolts (7a, b) configured for latching or unlatching hinge levers (10) extending into the latching unit (1), wherein the latching actuators (3a, b) comprise hollow screw shafts (6a, b) having threaded rods (8a, b) extending in opposite directions from adjacent ends (15a, b) of the hollow screw shafts (6a, b) and engaging with threaded elements (24a, b) provided in end portions (25a, b) of the respective latching bolts (7a, b), and wherein the latching bolts (7a, b) are movable in opposite axial directions into a latched or unlatched position by rotation of the threaded rods (8a, b).

2. Latching unit (1) according to claim 1, wherein each latching actuator (3a, b) is received in an independent housing (18a, b) with the housings (18a, b) being fixed opposite to each other to lugs (9) extending from the fixed wing part (202a, b).

3. Latching unit (1) according to claim 2, wherein the hollow screw shafts (6a, b) are supported by thrust bearings (21) arranged axially spaced between inner circumferential walls of the housings (18a, b) and outer circumferential surfaces of the hollow screw shafts (6a, b).

4. Latching unit (1) according to any one of claims 1 to 3, wherein a latching drive shaft (2) driving the latching actuators (3a, b) is provided, with the latching drive shaft (2) being connected to a drive unit.

5. Latching unit (1) according to claim 4, wherein the latching drive shaft (2) is coupled with a bevel gearbox (4) provided at the first or second latching actuator (3a, b).

6. Latching unit (1) according to any one of claims 1 to 5, wherein for driving the second latching actuator (3b) said second latching actuator (3b) is coupled to the first latching actuator (3a) by a connection element (5) arranged between adjacent ends (15a, b) of the first latching actuator (3a) and the second latching actuator (3b).

7. Latching unit (1) according to claim 6, wherein the connection element (5) comprises first splines (16) coupled to second splines (17) provided in the ends (15a, b) of the latching actuators (3a, b) projecting into the connection element (5) and wherein the first spline (16) is preferably designed as a crown spline and the second spline (17) is preferably designed as a female spline.

8. Latching unit (1) according to any one of claims 1 to 7, wherein the threaded rods (8a, b) are each configured as one of a ball screw, a roller screw, and a trapezoidal screw.

9. Latching unit (1) according to any one of claims 1 to 8, wherein coupled with the drive unit, a tip actuation drive shaft (26) for driving the tip actuation unit is provided passing through the latching unit (1), with the tip actuation drive shaft (26) comprising a first shaft section (26a) extending between the drive unit and the latching unit (1) and a second shaft section (26b) extending between the latching unit (1) and the tip actuation unit, wherein a bevel gear unit (27) is provided at the first or second latching actuator (3a, b) comprising a bevel gear positioned concentrically with the latching actuator (3a,b) and configured to mesh with bevel gears at each of the first and the second shaft section (26a, b) abutting with the bevel gear unit 27.

10. Latching unit (1) according to any one of claims 3 to 9, wherein the latching drive shaft (2) is coupled to a first brake unit acting on the latching shaft (2) and the tip actuation drive (26) shaft is coupled to a second brake unit acting on the tip actuation drive shaft (26) with the brake units being arranged in or adjacent to the drive unit.

11. Latching unit (1) according to any one of claims 1 to 10, wherein each of the latching actuators (3a, b) is provided with at least one locking mechanism (11), in particular comprising a spring-loaded cam lock (12) arranged perpendicular to the hollow screw shaft (6a, b), with the cam lock (12) configured to lock the latching bolt (7a, b) moved in the locking position, by rotating a rotatable cam (13) into a position behind the latching bolt (7a, b) and/or a spring loaded locking pin arranged perpendicular to the hollow screw shaft (6a, b), with the locking pin configured to lock the latching bolt (7a, b) moved in the latched position, by engaging behind the end portions (25a, b) of the latching bolts (7a, b).

12. Latching unit (1) according to claim 11, with each locking mechanisms (11) being provided with a locking actuator independently driven by a locking actuator drive unit or with the locking mechanisms (11) being interconnected by a locking actuator shaft (14) running in parallel with the hollow screw shafts (6a, b), wherein the interconnected locking mechanisms (11) are driveable simultaneously by the locking actuator drive unit via the locking actuator shaft (14).

13. Latching unit (1) according to any one of claims 11 or 12, wherein at least one locking position sensor (22) is provided in the locking mechanisms (11) configured to detect a position and/or integrity of the cam lock (12) and/or the locking pin and wherein at least one latching position sensor (23) is provided configured to detect at least one of a position and/or integrity of the threaded rods (8a, b) and/or the latching bolts (7a, b).

14. Aircraft wing (201a, b) having a fixed wing part (202a, b) and a hinged wing tip (204a, b) and comprising a latching unit (1) according to any one of claims 1 to 13.

15. Aircraft (200) having an aircraft wing (201a, b) according to claim 14.
